# EUROPÄISCHE PATENTSCHRIFT

(11) **EP 2 530 333 B1**
(45) Veröffentlichungstag und Bekanntmachung des Hinweises auf die Patenterteilung: **19.03.2014**
(21) Anmeldenummer: 12167659.7
(22) Anmeldetag: 11.05.2012
(51) Int. Cl.: F15B 11/16

(54) **Bearbeitungsvorrichtung**
Machining device
Dispositif de usinage

(30) Priorität: 11.05.2011 DE 102011075649
(43) Veröffentlichungstag der Anmeldung: 05.12.2012
(73) Patentinhaber: Homag Holzbearbeitungssysteme GmbH, 72296 Schopfloch (DE)
(72) Erfinder: Knorr, Wolfgang, 72145 Hirrlingen (DE)
(74) Vertreter: HOFFMANN EITLE

(56) Entgegenhaltungen:
- EP-B1- 0 810 136
- WO-A1-02/068858
- DE-A1- 3 412 979
- US-A- 6 145 535

## Beschreibung

### Technisches Gebiet

Die Erfindung betrifft eine Bearbeitungsvorrichtung zum Bearbeiten von Werkstücken, die vorzugsweise zumindest teilweiße Holz, Holzwerkstoffe, Metall, Kunststoff oder dergleichen umfassen.

Die Bearbeitungsvorrichtung umfasst dabei zumindest eine erste Gruppe miteinander in Verbindung stehender Druckluftverbraucher und zumindest eine zweite Gruppe miteinander in Verbindung stehender Druckluftverbraucher, wobei die Druckluftverbraucher der ersten Gruppe beispielsweise ein konstantes Druckniveau erfordern und die Druckluftverbraucher der zweiten Gruppe beispielsweise einen hohen Druckluftvolumenstrom erfordern.

### Stand der Technik

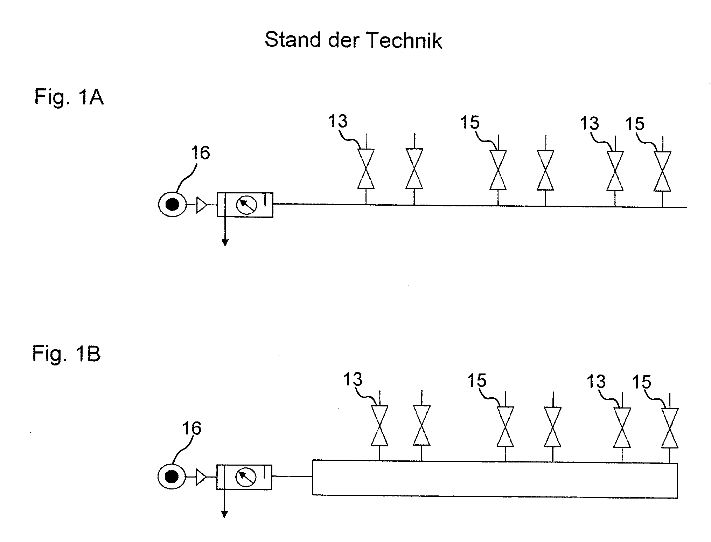

Aus dem Stand der Technik (siehe Fig. 1A und Fig. 1B) ist es bekannt, unterschiedliche Druckluftverbraucher, wie zum Beispiel Aktorik-Druckluftverbraucher und Blas- bzw. Reinigungsdruckluftverbraucher, an einer Hauptleitung innerhalb einer Bearbeitungsvorrichtung anzuschließen. Um dabei das für die Aktorik-Druckluftverbraucher notwendige Druckluftdruckniveau sicherzustellen, müssen das Druckluftniveau und der Druckluftvolumenstrom, der an den Druckluftverbrauchern anliegt, über dem für die Aktorik-Druckluftverbraucher notwendigen Druckluftniveau angesiedelt werden. Bedingt durch dieses überhöhte Druckluftdruckniveau verbrauchen die Blasluftverbrauchen, sofern diese nicht jeweils mittels einer eigenen Drosselung versehen werden, Druckluft in stark erhöhtem Maße, was energetisch ungünstig ist.

Bekannte Lösungsansätze ordnen die Aktorik-Druckluftverbraucher und die Blasluftverbraucher, wie in Fig. 1A gezeigt, in Form einer Stichleitung bzw., wie in Fig. 1B, gezeigt in Form einer Ringleitung an.

Aus dem Bereich der Fahrzeugbremsen ist die die DE 34 12 979 A1 bekannt, die auf eine Drucklufterzeugungseinrichtung mit zwei Kreisen mit unterschiedlichen Drücken und mit einem Drucklufterzeuger gerichtet ist, der zum Erzeugen des höheren der beiden Drücke geeignet ist.

### Darstellung der Erfindung

Der Erfindung liegt die Aufgabe zugrunde, bei einfachem Aufbau und geringem Energie verbrauch eine zuverlässige bzw. ausreichende Versorgung der unterschiedlichen Druckluftverbraucher mit Druckluft sicherzustellen.

Die Lösung der Aufgabe erfolgt durch den Gegenstand des Patentanspruchs 1. Bevorzugte Ausgestaltungen der erfindungsgemäßen Bearbeitungsvorrichtung ergeben sich aus den Unteransprüchen.

Der Erfindung liegt der Gedanke zugrunde Druckluftverbraucher zu kategorisieren und entsprechend ihren Anforderungen mit Druckluft zu versorgen.

Dabei umfasst die erfindungsgemäße Bearbeitungsvorrichtung zum Bearbeiten von Werkstücken die Merkmale des unabhängigen Anspruchs 1.

Druckluftverbraucher der ersten Gruppe sind dabei Aktuatoren, insbesondere Spannsysteme, Stellzylinder und oder Kappscheren sein und Druckluftverbraucher der zweiten Gruppe können beispielsweise Blasluftdüsen bzw. jede Art von Druckluftverbraucher sein, die einen hohen Druckluftvolumenstrom erfordern, der nicht mit einem minimalen Druckniveau anliegen muss.

Der Begriff "eine Gruppe miteinander in Verbindung stehender Druckluftverbraucher" bezeichnet dabei Druckluftverbraucher, wie beispielsweise Blasdüsen und/oder Druckluftaktuatoren, die über eine Leitung, einen Schlauch oder dergleichen miteinander verbunden sind. Ein Druckluftanschluss ist dabei ein Anschluss an der Bearbeitungsvorrichtung, der mit einer hallenseitigen Druckluftversorgung verbunden werden kann, sodass die Versorgung der Bearbeitungsvorrichtung mit Druckluft sichergestellt ist. Über geeignete Mittel kann der Druckluftanschluss mit der ersten Gruppe und/oder der zweiten Gruppe in Verbindung stehen.

Mit der erfindungsgemäßen Bearbeitungsvorrichtung kann dadurch, dass die erste Gruppe unabhängig von der zweiten Gruppe mit Druckluft versorgt wird, sichergestellt werden, dass den Druckluftverbrauchern der ersten Gruppe stets eine ausreichende Menge an Druckluft zur Verfügung steht, sodass die Funktionalität und Einsetzbarkeit der Druckluftverbraucher der ersten Gruppe stets sichergestellt ist. Ferner ist es möglich, den vormals notwendigen Überdruck, der an allen Druckluftverbrauchern anliegen musste, zu reduzieren, sodass Energiekosten bei der Erzeugung von Druckluft eingespart werden können. Zusätzlich ist es möglich, Druckschwankungen an den Druckluftverbrauchern der ersten Gruppe, die von den Druckluftverbrauchern der zweiten Gruppe hervor gerufen werden könnten, zu vermeiden, da die Druckluftverbraucher der ersten Gruppe unabhängig von den Druckluftverbrauchern der zweiten Gruppe mit Druckluft versorgt werden. Dadurch kann die Ausfallsicherheit der Bearbeitungsvorrichtung weiter erhöht werden.

Gemäß einer Ausgestaltung kann dabei die erste Gruppe mit einem Pufferspeicher, insbesondere mit einem Leitungspufferspeicher, versehen sein. Auf diese Weise kann besonders vorteilhaft sichergestellt werden, dass für den Fall, dass die Druckluftverbraucher der ersten Gruppe in erhöhtem Maße Druckluft verbrauchen oder die nachgeführte Menge an Druckluft zur Versorgung der Druckluftverbraucher der ersten Gruppe nicht ausreichend ist, Druckluft aus dem Pufferspeicher der ersten Gruppe zur Versorgung der Druckluftverbraucher der ersten Gruppe verwendet werden kann. Die Verwendung eines Leitungspufferspeichers, also beispielsweise einer Leitung mit einem erhöhtem Querschnitt oder einer anderen Form von Druckluftspeicher ist dabei besonders vorteilhaft.

Gemäß einer weiteren besonders bevorzugten Ausführungsform kann eine Verbindungsleitung zwischen der ersten Gruppe und dem Druckluftanschluss mit einem Rückschlagventil vorgesehen sein. Auf diese Weise ist es möglich sicherzustellen, dass für den Fall, dass das an der ersten Gruppe anliegende Druckluftniveau unter einen Sollwert abfällt, das Druckluftniveau in der ersten Gruppe nicht zur Versorgung der zweiten Gruppe verwendet wird bzw. über den Druckluftanschluss zurück in die Druckluftversorgung gespeist wird. Ferner wirkt das Rückschlagventil in Verbindung mit dem Pufferspeicher besonders vorteilhaft, da auf diese Weise mit Vorteil die Versorgung mit Druckluft der Druckluftverbraucher der ersten Gruppe über einen verlängerten Zeitraum hinweg sichergestellt werden kann.

Die Druckluftverbraucher der ersten und zweiten Gruppe können dabei ein unterschiedliches Soll-Druckniveau aufweisen, wobei das Druckniveau der ersten Gruppe bevorzugt höher gewählt wird als das Druckluftniveau der zweiten Gruppe. Alternativ können die erste und zweite Gruppe auch ein identisches Soll-Druckniveau aufweisen.

Gemäß einer weiteren besonders bevorzugten Ausführungsform sind die erste und zweite Gruppe über einen gemeinsamen Knotenpunkt an bzw. in der Bearbeitungsvorrichtung mit dem Druckluftanschluss verbunden. Auf diese Weise ist es besonders vorteilhaft möglich, die individuellen Gruppen jeweils mit einem an der Bearbeitungsvorrichtung vorgesehenen Mittel mit dem jeweiligen (unterschiedlichen oder identischen) Druckluftniveau zu verbinden. Alternativ ist es auch möglich, außerhalb der Bearbeitungsvorrichtung zwei getrennte Druckluftnetze vorzusehen (ggf. mit gleichem oder unterschiedlichem Druckniveau), mit welchen die beiden Gruppen jeweils getrennt mit Druckluft versorgt werden.

Ferner ist es möglich, beispielsweise die erste Gruppe mit einem Druckverstärker, insbesondere mit einem Druckbooster zu versehen, sodass das an der ersten Gruppe anliegende Soll-Druckniveau verringert werden kann. Auf diese Weise ist es insgesamt möglich, dass an der Boarbeitungsvorrichtung bzw. an dem Druckluftanschluss anliegende Druckniveau anzusenken, wodurch Energiekosten bei der Bereitstellung von Druckluft eingespart werden können.

Dabei ist es gemäß einer weiteren Alternative auch möglich, die zweite Gruppe mit einem Druckminderer zu versehen. Dies hat zum Vorteil, dass beispielsweise das an dem Druckluftanschluss anliegende Druckniveau dem Druckniveau der ersten Gruppe angepasst werden kann und, dass die Druckluft der zweiten Gruppe (beispielsweise Blasluftdüsen) mit niedrigerem Druck versorgt werden können. Dadurch ist es besonders vorteilhaft möglich, Energiekosten einzusparen.

### Kurze Beschreibung der Zeichnungen

Fig. 1A zeigt eine Druckluftverbraucheranordnung aus dem Stand der Technik in Form einer Stichleitung;
Fig. 1B zeigt eine Druckluftverbraucheranordnung aus dem Stand der Technik in Form einer Ringleitung;
Fig. 2 zeigt eine erfindungsgemäße Bearbeitungsvorrichtung 10 gemäß einer ersten Ausführungsform;
Fig. 3 zeigt eine erfindungsgemäße Bearbeitungsvorrichtung 10 gemäß einer zweiten Ausführungsform.

### Ausführliche Beschreibung bevorzugter Ausführungsformen der Erfindung

### Im Folgenden wird eine erfindungsgemäße

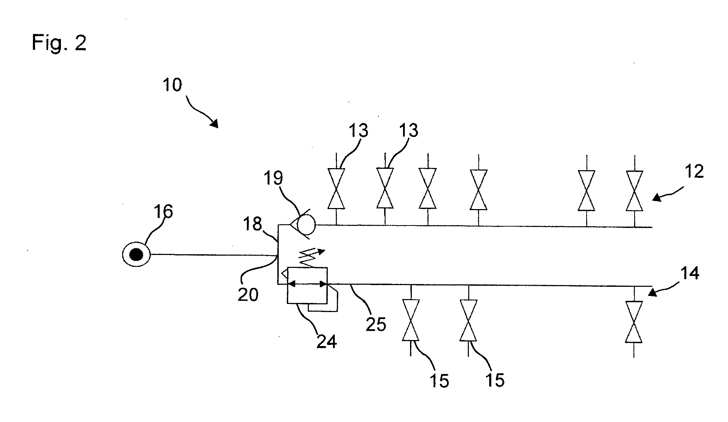

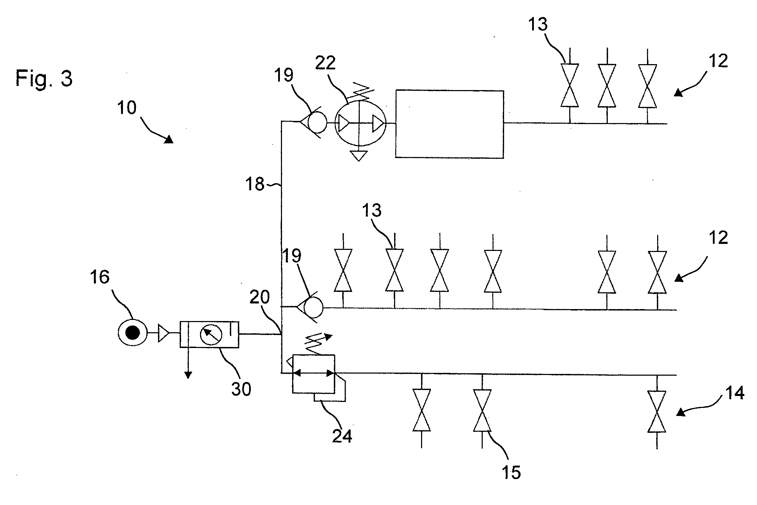

Bearbeitungsvorrichtung 10 anhand rein beispielhafter Ausführungsformen unter Bezugnahme auf die Figuren 2 und 3 beschriebene

Dabei zeigt Fig. 2 eine erste Ausführungsform der Bearbeitungsvorrichtung mit einer einzigen ersten Gruppe 12 und Fig. 3 zeigt eine zweite Ausführungsform der Bearbeitungsvorrichtung 10 mit einer unterteilten ersten Gruppe 12.

In dem in Fig. 2 gezeigten Ausführungsbeispiel sind die Druckluftverbraucher 13 der ersten Gruppe 12 über eine Verbindungsleitung 18 mit einem Druckluftanschluss 16 verbunden. Die Druckluftverbraucher 15 der zweiten Gruppe 14 sind in dem gezeigten Ausführungsbeispiel ebenfalls über eine Leitung 25 mit dem Druckluftanschluss 16 verbunden. Ein gemeinsamer Knotenpunkt 20 zwischen der Verbindungsleitung 18 und der Verbindungsleitung 25 kann vorgesehen sein.

Der Druckluftanschluss 16 der Bearbeitungsvorrichtung 10 ist beispielsweise mit einer hallenseitig vorgesehenen Druckluftleitung verbunden. Alternativ kann der Druckluftanschluss 16 direkt mit einem Kompressor gekoppelt werden.

Die Druckluftverbraucher 13 der ersten Gruppe 12 erfordern (in dem gezeigten Ausführungsbeispiel) ein erhöhtes Soll-Druckniveau. Um sicherzustellen, dass auch bei absinken des durch den Druckluftanschluss 16 bereitgestellten Druckniveaus unter den Wert des Soll-Druckniveaus (für eine kurze Zeit) kein darunterliegendes Druckniveau an den Druckluftverbraucher 13 der ersten Gruppe 12 anliegt, ist ein Rückschlagventil 19 in der Verbindungsleitung 18 zwischen der ersten Gruppe 12 und dem Druckluftanschluss 16 (auf der Seite der ersten Gruppe des Knotenpunktes 20) vorgesehen. Ferner kann, um das Druckluftniveau in der ersten Gruppe 12 beim Abfallen des Druckluftniveaus auf Verbraucherseite sicherzustellen, die Leitung, die die Druckluftverbraucher 13 der ersten Gruppe 12 verbindet, mit einem ausreichend großen Querschnitt versehen sein, sodass die Leitung als ein sogenannter Leitungspufferspeicher dient, der das Druckluftniveau über einen verlängerten Zeitraum aufrecht erhält. Alternativ kann auch innerhalb der ersten Gruppe ein separat ausgebildeter Pufferspeicher (beispielsweise in Form eines Tanks oder Behälters) vorgesehen sein.

Ferner kann, wie in Fig. 2 gezeigt, ein Druckminderer 24 den Druckluftverbrauchern 15 der zweiten Gruppe 14 vorgeschaltet sein.

Diese Art der Anordnung mit Pufferspeicher, Rückschlagventil 19 und/oder Druckminderer 24 weist unter anderem den Vorteil auf, dass der an dem Druckluftanschluss 16 anliegende Druck gesenkt werden kann, beispielsweise von 7 bar auf 6 bar. Mit dem Druckverstärker bzw. dem Druckbooster 22 kann der Druck ggf. wieder, wenn notwendig, erhöht werden und mit dem Druckminderer 24 kann der Druck, wenn nötig, für die zweite Gruppe 14 gesenkt werden.

Fig. 3 zeigt ein zweites Ausführungsbeispiel der vorliegenden Erfindung. Im Unterschied zu dem ersten Ausführungsbeispiel ist in Fig. 3 die erste Gruppe 12 nochmals unterteilt in eine erste Gruppe 12, die ein geringeres Soll-Druckniveau erfordert, das beispielsweise dem Druckniveau des Druckluftanschlusses 16 entspricht, und eine weitere erste Gruppe (in Fig. 3 oben), die ein Soll-Drucknzveau erfordert, das erhöht ist und daher mittels des Druckboosters 22 verstärkt wird.

Zusätzlich ist dem Druckanschluss 16 unmittelbar nachgeordnet eine Überwaschungs- und Reinigungseinheit 30 nachgeschaltet, die den Druck in der Leitung überwacht und die Druckluft von Verunreinigungen reinigt.

## Patentansprüche

1. Bearbeitungsvorrichtung (10) zum Bearbeiten von Werkstücken, die vorzugsweise zumindest teilweise Holz, Holzwerkstoffen, Metall, Kunststoff oder dergleichen umfassen, umfassend
- zumindest eine erste Gruppe (12) miteinander in Verbindung stehender Druckluftverbraucher (13),
- zumindest eine zweite Gruppe (14) miteinander in Verbindung stehender Druckluftverbraucher (15),
- zumindest einen Druckluftanschluss (16), der mit der ersten Gruppe (12) und/oder der zweiten Gruppe (14) in Verbindung steht,
wobei die Bearbeitungsvorrichtung (10) dazu ausgebildet ist, die Druckluftverbraucher (13) der ersten Gruppe (12) unabhängig von den Druckluftverbrauchern (15) der zweiten Gruppe (14) mit Druckluft zu versorgen,
wobei die erste Gruppe (12) Druckluftverbraucher in der Form von Aktuatoren, insbesondere Spannsysteme, Stellzylinder und/oder Kappscheren umfasst, und
die zweite Gruppe (14) Druckluftverbraucher in der Form von Blasluftdüsen oder Druckluftverbrauchern umfasst, die einen hohen Druckluftvolumenstrom erfordern, der nicht mit einem minimalen Druckniveau anliegen muss.

2. Bearbeitungsvorrichtung nach Anspruch 1, **dadurch gekennzeichnet, dass** die erste Gruppe (12) mit einem Pufferspeicher, insbesondere einem Leitungspufferspeicher, versehen ist.

3. Bearbeitungsvorrichtung nach einem der vorhergehenden Ansprüche, **dadurch gekennzeichnet, dass** eine Verbindungsleitung (18) zwischen der ersten Gruppe (12) und dem Druckluftanschluss (16) mit einem Rückschlagventil (19) versehen ist.

4. Bearbeitungsvorrichtung nach einem der vorhergehenden Ansprüche, **dadurch gekennzeichnet, dass** die erste (12) und zweite (14) Gruppe ein unterschiedliches Soll-Druckniveau aufweisen.

5. Bearbeitungsvorrichtung nach einem der vorhergehenden Ansprüche 1 bis 5, **dadurch gekennzeichnet, dass** die erste (12) und zweite (14) Gruppe ein identisches Soll-Druckniveau aufweisen.

6. Bearbeitungsvorrichtung nach einem der vorhergehenden Ansprüche, **dadurch gekennzeichnet, dass** die erste (12) und zweite (14) Gruppe über einen Knotenpunkt (20) an der Bearbeitungsvorrichtung mit dem Druckluftanschluss verbunden sind.

7. Bearbeitungsvorrichtung nach einem der vorhergehenden Ansprüche, **dadurch gekennzeichnet, dass** die erste Gruppe (12) mit einem Druckverstärker, insbesondere mit einem Druckbooster (22), versehen ist.

8. Bearbeitungsvorrichtung nach einem der vorhergehenden Ansprüche, **dadurch gekennzeichnet, dass** die zweite Gruppe (14) mit einem Druckminderer (24) versehen ist.

## Claims

1. Processing apparatus (10) for processing workpieces which are preferably at least partially made of wood, derived timber products, metal, plastic or the like, comprising
- at least one first group (12) of pneumatic appliances (13) connected to each other,
- at least one second group (14) of pneumatic appliances (15) connected to each other,
- at least one compressed air supply (16) which is connected to the first group (12) and/or the second group (14),
wherein the processing apparatus (10) is designed to supply the pneumatic appliances (13) of the first group (12) with compressed air independently of the pneumatic appliances (15) of the second group (14),
wherein the first group (12) comprises pneumatic appliances in the form of actuators, in particular clamping systems, actuating cylinders and/or trimmers, and
the second group (14) comprises pneumatic appliances in the form of air jets or pneumatic appliances which require a high volume flow of compressed air which does not have to be at a minimum pressure level.

2. Processing apparatus according to claim 1, **characterised in that** the first group (12) is provided with a buffer memory, in particular a line buffer memory.

3. Processing apparatus according to any of the preceding claims, **characterised in that** a connecting line (18) between the first group (12) and the compressed air supply (16) is provided with a non-return valve (19).

4. Processing apparatus according to any of the preceding claims, **characterised in that** the first (12) and second (14) groups have a different nominal pressure level.

5. Processing apparatus according to any of the preceding claims 1 to 5, **characterised in that** the first (12) and second (14) groups have an identical nominal pressure level.

6. Processing apparatus according to any of the preceding claims, **characterised in that** the first (12) and second (14) groups are connected to the compressed air supply via a junction (20) on the processing apparatus.

7. Processing apparatus according to any of the preceding claims, **characterised in that** the first group (12) is provided with a pressure intensifier, in particular a pressure booster (22).

8. Processing apparatus according to any of the preceding claims, **characterised in that** the second group (14) is provided with a pressure reducer (24).

## Revendications

1. Dispositif d'usinage (10) pour l'usinage de pièces comprenant au moins partiellement du bois, des matériaux ligneux, du métal, de la matière plastique ou similaires, comprenant :
- au moins un premier groupe (12) de récepteurs pneumatiques (13) reliés les uns aux autres,
- au moins un deuxième groupe (14) de récepteurs pneumatiques (15) reliés les uns aux autres,
- au moins un raccord pneumatique (16), relié au premier groupe (12) et/ou au deuxième groupe (14),
le dispositif d'usinage (10) étant prévu pour alimenter en air comprimé les récepteurs pneumatiques (13) du premier groupe (12) indépendamment des récepteurs pneumatiques (15) du deuxième groupe (14),
le premier groupe (12) comprenant des récepteurs pneumatiques sous la forme d'actionneurs, en particulier de systèmes de serrage, de vérins et/ou de cisailles, et
le deuxième groupe (14) comprenant des récepteurs pneumatiques sous la forme de buses de soufflage d'air ou de récepteurs pneumatiques exigeant un débit volumique élevé d'air comprimé, qui ne doit pas être appliqué avec un niveau de pression minimal.

2. Dispositif d'usinage selon la revendication 1, **caractérisé en ce que** le premier groupe (12) est pourvu d'un réservoir tampon, en particulier d'un réservoir tampon de conduite.

3. Dispositif d'usinage selon l'une des revendications précédentes, **caractérisé en ce qu'**une conduite de connexion (18) entre le premier groupe (12) et le raccord pneumatique (16) est pourvue d'une vanne anti-retour (19).

4. Dispositif d'usinage selon l'une des revendications précédentes, **caractérisé en ce que** le premier (12) et le deuxième (14) groupes présentent des niveaux de pression de consigne différents.

5. Dispositif d'usinage selon l'une des revendications 1 à 5, **caractérisé en ce que** le premier (12) et le deuxième (14) groupes présentent le même niveau de pression de consigne.

6. Dispositif d'usinage selon l'une des revendications précédentes, **caractérisé en ce que** le premier (12) et le deuxième (14) groupes sont reliés au raccord pneumatique par un noeud (20) sur le dispositif d'usinage.

7. Dispositif d'usinage selon l'une des revendications précédentes, **caractérisé en ce que** le premier groupe (12) est pourvu d'un multiplicateur de pression, en particulier d'un booster de pression (22).

8. Dispositif d'usinage selon l'une des revendications précédentes, **caractérisé en ce que** le deuxième groupe (14) est pourvu d'un réducteur de pression (24).
